(19) Europäisches Patentamt
European Patent Office
Office européen des brevets

(11) **EP 2 439 491 A1**

(12) **EUROPEAN PATENT APPLICATION**
published in accordance with Art. 153(4) EPC

(43) Date of publication:
**11.04.2012 Bulletin 2012/15**

(21) Application number: **10783102.6**

(22) Date of filing: **21.05.2010**

(51) Int Cl.:
*G01C 3/06* (2006.01)    *G06T 1/00* (2006.01)

(86) International application number:
**PCT/JP2010/003441**

(87) International publication number:
**WO 2010/140314 (09.12.2010 Gazette 2010/49)**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **03.06.2009 JP 2009134225**

(71) Applicant: **Panasonic Corporation**
**Kadoma-shi**
**Osaka 571-8501 (JP)**

(72) Inventor: **LIU, Weijie**
**Chuo-ku**
**Osaka 540-6207 (JP)**

(74) Representative: **Grünecker, Kinkeldey,**
**Stockmair & Schwanhäusser**
**Anwaltssozietät**
**Leopoldstrasse 4**
**80802 München (DE)**

(54) **DISTANCE MEASURING DEVICE AND DISTANCE MEASURING METHOD**

(57)    Provided are a distance measuring device and a distance measuring method which sufficiently suppress distance detection accuracy degradation caused by detection errors pertaining to a measurement subject, thereby making high-accuracy measurement of the distance to the measurement subject that is imaged. First to third region detection units (101 to 103) detect, from images taken of the measurement subject, those region images in a plurality of regions which are included in the measurement subject and whose sizes are known. A relative error comparison unit (104) uses not only those image sizes, D1 to D3, in a plurality of regions which are detected by the region detection units (101 to 103), but also information regarding sizes which are known in a plurality of regions, to select the region image size that minimizes relative errors d1/D1, d2/D2, and d3/D3, which are ratios pertaining to image sizes D1, D2, and D3, and to errors, d1, d2, and d3, included in the image sizes, respectively. A distance estimation unit (105) uses the selected region image size to calculate the distance to the measurement subject.

FIG.3

**Description**

Technical Field

The present invention relates to a distance measuring apparatus and distance measuring method that measure a distance to an object using a photographic image.

Background Art

The idea has heretofore been conceived of imaging a road situation by means of a camera installed in a vehicle, and supporting driving and/or controlling the vehicle based on an image captured thereby.
In this case, it is extremely important to detect an object such as a road traffic sign, notice board, traffic signal, or the like, present in an image captured by the camera by executing predetermined processing on the image, and measure the distance between the detected object and the camera.
In general, the distance between a camera and an object (object distance) can be found by means of equation 1 below.

$$\text{Object distance} = (\text{camera focal length} \times \text{actual object size}) / (\text{pixel pitch} \times$$

$$\text{number of object pixels}) \quad \dots \text{(Equation 1)}$$

Here, the actual object size is the actual size of an object, the pixel pitch is the size of one pixel of an imaging element (CCD, CMOS, or the like), and the number of object pixels is the number of pixels by which the object is displayed. That is to say, "pixel pitch $\times$ number of object pixels" represents the image size of an object. The focal length and pixel pitch are camera specification characteristics, and are normally fixed values or known values of a particular camera.
The technologies disclosed in Patent Literature 1 and 2 are examples of technologies that measure the distance between a camera and an object using the relationship in equation 1. The technology disclosed in Patent Literature 1 images road signs, traffic signals, or suchlike objects whose sizes have been unified according to a standard, and measures the distance to an object based on the size of an object in an image.
The technology disclosed in Patent Literature 2 images a vehicle number plate, measures the size of characters on the number plate in the image, and measures the distance from the camera to the vehicle by comparing the size of the measured characters with the size of a known character decided according to a standard.
Also, in Patent Literature 3, a position recording apparatus is disclosed whereby accurate position recording of an object can be performed by taking into account object detection error. In Patent Literature 3, a vehicle's own position is measured using a GPS or suchlike positioning apparatus, and when the relative positions (relative distance and relative direction) of an object and the vehicle are calculated from a photographic image, error occurs in measurement of the vehicle's own position or calculation of the relative positions. Consequently, a technology is disclosed whereby maximum error is compared for a plurality of points at which an object is detected, and position information of an object captured at a point at which maximum error is smallest is recorded.

Citation List

Patent Literature

PTL 1
Japanese Patent Application Laid-Open No. HEI 8-219775
PTL 2
Japanese Patent Application Laid-Open No. 2006-329776
PTL 3
Japanese Patent Application Laid-Open No. 2006-330908

Summary of Invention

Technical Problem

However, in the technologies disclosed in Patent Literature 1 and Patent Literature 2, detection error when an object is detected from an image is not taken into account. More particularly, when an object such as a road sign or a number plate of a vehicle ahead is imaged by a vehicle-mounted camera, the object is often tens of meters away from the vehicle-mounted camera, and therefore an object in an image is small in size. As a result, relative error, which is the ratio between image size and error included in image size, is large. As this relative error increases in size, distance measurement accuracy degrades.

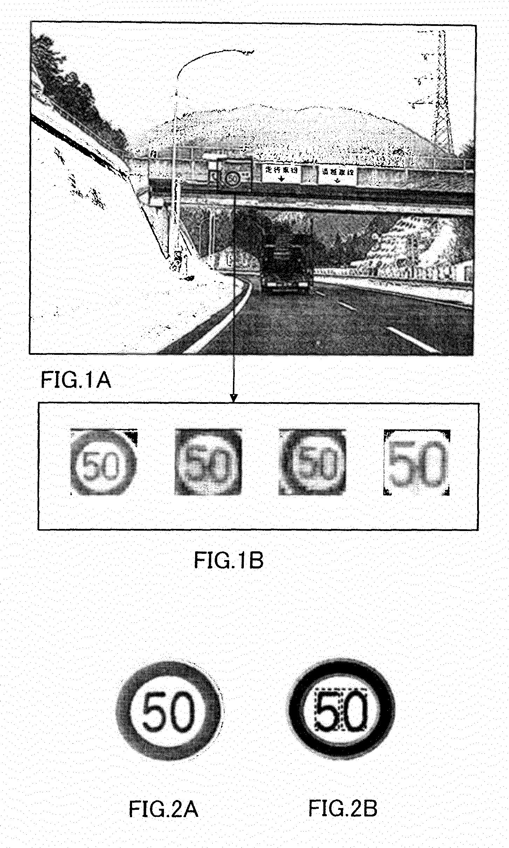

FIG.1 shows an example in which a speed limit sign is detected from an actual vehicle-mounted camera image. FIG.1A is a vehicle-mounted camera image, and FIG.1B shows the results of detecting a speed limit sign from virtually consecutive frames, normalized to a 64×64 size. As shown in FIG.1B, even if an actual distance of movement of a vehicle is small, there is great variation in the image size of detected images due to environmental variations such as changes in illumination and relative direction.

On the other hand, in the technology disclosed in Patent Literature 3, object detection error is taken into account, but only maximum error is taken into account as a theoretical value, and actual detection error is not taken into account. Also, since maximum error is fixed for each measurement position, this is in effect the same as selecting an optimal position, and the influence of illumination variation and so forth is not taken into account. That is to say, it is difficult to sufficiently suppress degradation of distance detection accuracy due to object detection error.

It is an object of the present invention to provide a distance measuring apparatus and distance measuring method that sufficiently suppress degradation of distance detection accuracy due to object detection error, and measure the distance to an imaged object with a high degree of accuracy.

Solution to Problem

One aspect of a distance measuring apparatus of the present invention employs a configuration having: a region image detection section that detects, from a captured image of an object, region images of a plurality of regions that are included in the object and whose sizes are known; a relative error comparison section that uses image sizes of the plurality of regions detected by the region image detection section, and information regarding sizes that are known in the plurality of regions, to select a region image size that minimizes relative error that is a ratio between the image size and error included in the image size; and a distance estimation section that uses the selected region image size to estimate the distance to the object.

Advantageous Effects of Invention

The present invention can sufficiently suppress degradation of distance detection accuracy due to object detection error, and measure the distance to an imaged object with a high degree of accuracy.

Brief Description of Drawings

FIG.1 is a drawing showing how a speed limit sign is detected from an actual vehicle-mounted camera image;
FIG.2 is a drawing showing speed limit signs;
FIG.3 is a block diagram showing the configuration of a distance measuring apparatus according to Embodiment 1 of the present invention;
FIG.4 is a flowchart showing the processing procedure in the relative error comparison section shown in FIG.3;
FIG.5 is a drawing in which the four detection results shown in F1G.1B are represented by binary images;
FIG.6 is a block diagram showing the configuration of a distance measuring apparatus according to Embodiment 2 of the present invention;
FIG.7 is a drawing showing relative error probability density distributions;
FIG.8 is a drawing showing relative error probability density distributions;
FIG.9 is a block diagram showing the configuration of a distance measuring apparatus according to Embodiment 3 of the present invention;
FIG.10 is a drawing showing images of a stop sign captured at night; and
FIG.11 is a drawing showing a number plate.

Description of Embodiments

Now, embodiments of the present invention will be described in detail with reference to the accompanying drawings.

(Embodiment 1)

FIG.2A is a drawing showing a speed limit sign. In this drawing, the circular outer frame of a sign is taken as a first region, the circular inner frame is taken as a second region, and a rectangular frame surrounding left numeral "5" or right numeral "0" is defined as a third region. FIG.2B shows a binary image of FIG.2A. Below, the speed limit sign shown in FIG.2 will be described as an example.

[1] Overall configuration

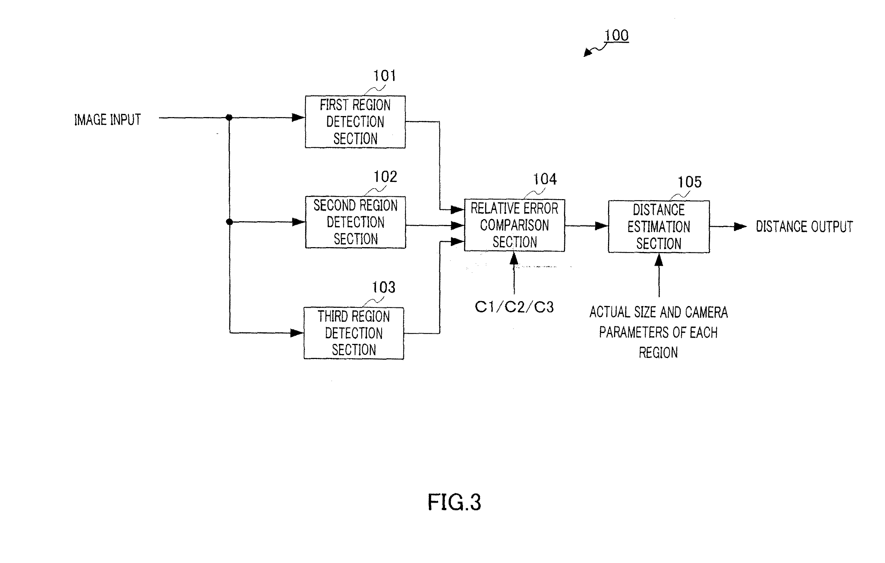

FIG.3 is a block diagram showing the configuration of distance measuring apparatus 100 according to Embodiment 1 of the present invention. Distance measuring apparatus 100 is installed in an automobile or suchlike vehicle, and inputs image information (a binary image) to first through third region detection sections 101 through 103. Image information is an image of vehicle surroundings captured in real time by a camera installed in a vehicle.

First through third region detection sections 101 through 103 detect each region corresponding to a speed limit sign from input image information, count the number of pixels of a detected region, and output the counted numbers of pixels to relative error comparison section 104 as measured image sizes D1 through D3.

Specifically, first region detection section 101 detects the outer circle of the speed limit sign in FIG.2B as a first region, second region detection section 102 detects the inner circle of the speed limit sign in FIG.2B as a second region, and third region detection section 103 detects a numeral of the speed limit sign in FIG.2B as a third region. Here, as is clear from FIG.2B, the relationship "outer circle image size > inner circle image size > numeral image size (for example, left-hand numeral 5 outer frame size)" applies, and therefore the relationship "D1>D2>D3" should apply.

Relative error comparison section 104 uses image sizes D1, D2, and D3 of a plurality of regions detected by first, second, and third region detection sections 101, 102, and 103, and information regarding sizes that are known in a plurality of regions, to select a region image size that minimizes relative errors d1/D1, d2/D2, and d3/D3, which are ratios between image sizes D1, D2, and D3, and errors d1, d2, and d3 included in image sizes D1, D2, and D3.

Distance estimation section 105 uses the image size selected by relative error comparison section 104 to estimate the distance to the object. To be more specific, distance estimation section 105 estimates the distance to the object by applying the image size output from relative error comparison section 104 to the number of object pixels in above equation 1.

[2] Processing using relative error

Here, processing will be described that uses relative error to select an image size of a region to be used in distance calculation.

First through third region true image sizes C1 through C3 are expressed as shown in equations 2 below using measured image sizes D1 through D3 and measured errors d1 through d3.

$$C1 = D1 + d1$$

$$C2 = D2 + d2 \quad \text{... (Equations 2)}$$

$$C3 = D3 + d3$$

C1 through C3 and d1 through d3 are unknown values. Since C1 through C3 are proportional to a standardized object size, the relationships in equations 3 below apply.

$$C1 = k21 \times C2$$

$$C3 = k23 \times C2 \quad \text{... (Equations 3)}$$

Here, k21 and k23 are known constants. That is to say, from any one of C1 through C3, relative error comparison section 104 can calculate the other two. Below, it is assumed that C1 though C3 generally correspond to the same distance Z.

If distances calculated from D1, D2, and D3 are designated Z+z1, Z+z2, and Z+z3, respectively, the relationships in equations 4 below are found from the relationship between object distance and image size. Here, z1, z2, and z3 are distance errors when image size errors d1, d2, and d3 are included.

$$z1/Z = d1/D1$$

$$z2/Z = d2/D2 \qquad ... (Equations\ 4)$$

$$z3/Z = d3/D3$$

This shows that relative errors of an image size of each region are equal to relative errors of calculated distances, respectively. Therefore, minimizing relative error enables the accuracy of a calculated distance to be improved. However, since C1 through C3 and d1 through d3 are unknown, the true value of relative error cannot be found.

Thus, the present inventor found a method whereby an image size that minimizes relative error is found by using information regarding sizes that are known in a plurality of regions, and the accuracy of a calculated distance is improved by performing distance calculation using that image size. In actuality, in this embodiment, information regarding size ratios that are known in a plurality of regions, such as shown in equations 3, is used as information regarding sizes that are known in a plurality of regions.

The reason for using relative error is as follows. Namely, if selection of an image size that minimizes error is attempted by comparing absolute errors, since absolute error is necessarily smaller for a region with a smaller image size, the smaller the image size of a region, the likelier it is to be selected as an image used in distance calculation. Since distance measuring apparatus 100 uses relative error as in this embodiment, an image size suitable for use in distance calculation can be selected on an equitable basis, regardless of the size of a region.

In this embodiment, the following three methods are included as ways of finding an image size that minimizes relative error.

[2-1] Method 1: Using a relative error sum minimization rule

Relative error comparison section 104 uses measured image sizes D1 through D3 output from first through third region detection sections 101 through 103, and first through third region measured errors d1 through d3, to calculate relative error sum d1/D1+d2/D2+d3/D3. Then relative error comparison section 104 finds an image size that minimizes this relative error sum d1/D1+d2/D2+d3/D3, determines that that image size is an image size suitable for use in distance calculation, and sends that image size to distance estimation section 105.

Specifically, relative error comparison section 104 finds an image size that minimizes this relative error sum d1/D1+d2/D2+d31D3 by means of the following kind of procedure.

(i) First, it is assumed that C2 is a certain value. Normally, as can be seen from the relationship in FIG.2B, C2 is within the range [D3, D1], and therefore the assumed C2 value is set within the range [D3, D1].

(ii) The assumed C2 is then used in equations 3 to calculate the values of C1 and C3.

(iii) Next, the values of d1, d2, and d3 are calculated using the values of C1 through C3, the values of D1 through D3, and equations 2.

(iv) Relative error sum d1/D1+d2/D2+d3/D3 is then calculated.

Relative error comparison section 104 varies the value of C2 assumed in (i) above within the range [D3, D1], determines a value of C2 that minimizes the relative error sum obtained in (iv) above to be an optimal image size for distance calculation, and outputs that value of C2 to distance estimation section 105.

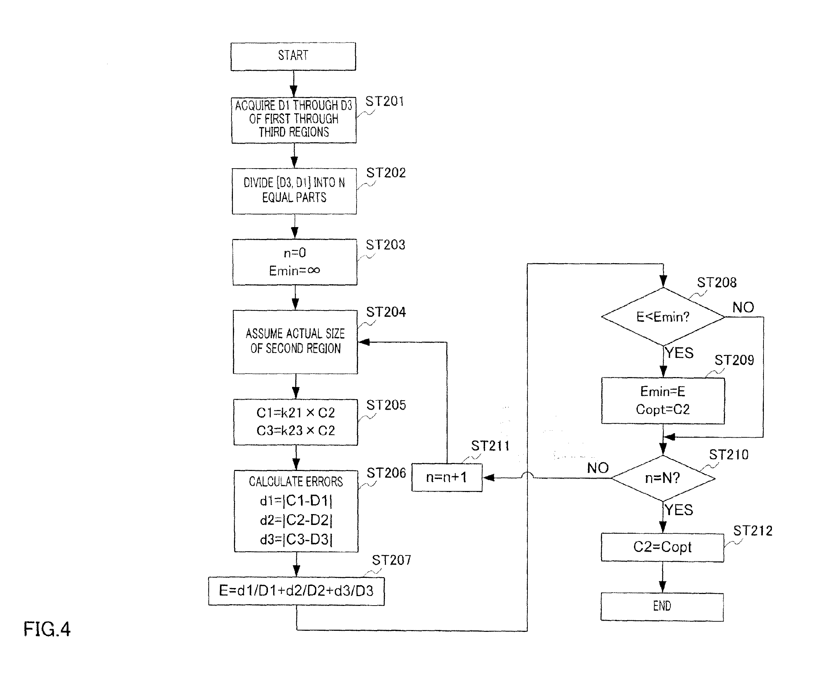

A more specific example of processing using this relative error sum minimization rule will now be described using FIG.4. In FIG.4, in step ST 201 first through third region detection sections 101 through 103 acquire first through third region measured image sizes D1 through D3.

Next, in step ST 202, relative error comparison section 104 sets variation b that sequentially varies assumed C2 by dividing the difference between acquired D3 and D1 into N equal parts. That is to say, relative error comparison section 104 sets variation b using $D3-D1=N \times b$.

Next, in step ST 203, first, n is set to 0, and Emin, which is the minimum value of relative error sum E, is set to ∞, as initial values. Then, in step ST 204, the assumed C2 value is set to C2=D3+n×b. In step ST 205, C1=k21×C2 and C3=k23×C2 are calculated using equations 3.

In step ST 206, measured errors d1 through d3 are calculated using equations 2, and in step ST 207, relative error sum E (=d1/D1+d2/D2+d3/D3) is calculated.

In step ST 208, it is determined whether or not relative error sum E found in step ST 207 is less than minimum value Emin up to that point, and if E is less than Emin (YES), the processing flow proceeds to step ST 209, whereas if E is not less than Emin (NO), the processing flow proceeds to step ST 210.

In step ST 209, Emin is set to E calculated in step ST 207 and C2 at that time is set to the optimal C (Copt) and temporarily stored. In step ST 210, it is determined whether or not n has reached N, and if n≠N (NO), the processing flow proceeds to step ST 211, whereas if n=N (YES), the processing flow proceeds to step ST 212.

In step ST 211, n is incremented, and the processing flow returns to step ST 204.

In step ST 212, Copt stored in step ST 209 is decided upon as C2, and relative error comparison processing is terminated.

In this way, a value of C2 that minimizes the relative error sum -- that is, an optimal image size for distance calculation -- can be found.

In the above example, a case has been described in which an assumed C2 value is varied within the range [D3, D1], and C2 that minimizes relative error sum d1/D1+d2/D2+d3/D3 is determined to be an optimal image size for distance calculation. Provision may also be made for C1 or C3 to be assumed to be a certain value instead of C2 in the above example, for the same kind of method as above to be used to determine a value of C1 or C3 that minimizes the relative error sum to be an optimal image size for distance calculation, and for this value to be output to distance estimation section 105.

[2-2] Method 2: Selecting the most accurate value from existing measured image sizes D1 through D3

In method 1, a method of finding an optimal C2 was described, whereas here, a method will be described whereby an optimal C2 is not found, but the most accurate value is selected from existing measured image sizes D1 through D3.

First, relative error comparison section 104 assumes that d1=0, and sets C1=D1. Relative error comparison section 104 also finds C2 and C3 by using size ratios that are known in a plurality of regions. For example, in the case of FIG.2B, ratio C1/C2/C3 (identical in meaning to C1:C2:C3) for C1, C2, and C3 is uniquely decided as 60/40/23.5, and therefore C2 and C3 are found from C1 using this ratio. Relative error comparison section 104 furthermore uses equations 2 to find d2 and d3. Then relative error comparison section 104 finds a relative error sum of other regions excluding one region for which error is made 0. Here, relative error sum e1=d2/D2+d3/D3 is found as a relative error sum of other regions.

Similarly, relative error comparison section 104 assumes that d2=0, and sets C2=D2. Relative error comparison section 104 also uses known ratio C1/C2/C3 to find C1 and C3 from C2, and furthermore finds d1 and d3. Then relative error comparison section 104 finds relative error sum e2=d1/DI+d3/D as a relative error sum of other regions.

In a similar way, relative error comparison section 104 also assumes that d3=0, and sets C3=D3. Relative error comparison section 104 also uses known ratio C1/C2/C3 to find C1 and C2 from C3, and furthermore finds d1 and d2. Then relative error comparison section 104 finds relative error sum e3=d1/D1+d2/D2 as a relative error sum of other regions.

Relative error comparison section 104 detects the minimum value from among other-region relative error sums e1 through e3 found in this way. Then an image size of a region for which error is made 0 when an other-region relative error sum is smallest is selected as an image size of a region that minimizes relative error. For example, if e1 is the smallest among other-region relative error sums e1 through e3, measured image size D1 is selected as a region image size that minimizes relative error. Similarly, if e2 is the smallest among other-region relative error sums e1 through e3, measured image size D2 is selected as a region image size that minimizes relative error.

Relative error comparison section 104 then determines selected measured image size D1, D2, or D3 to be an optimal image size for distance calculation, and outputs selected measured image size D1, D2, or D3 to distance estimation section 105.

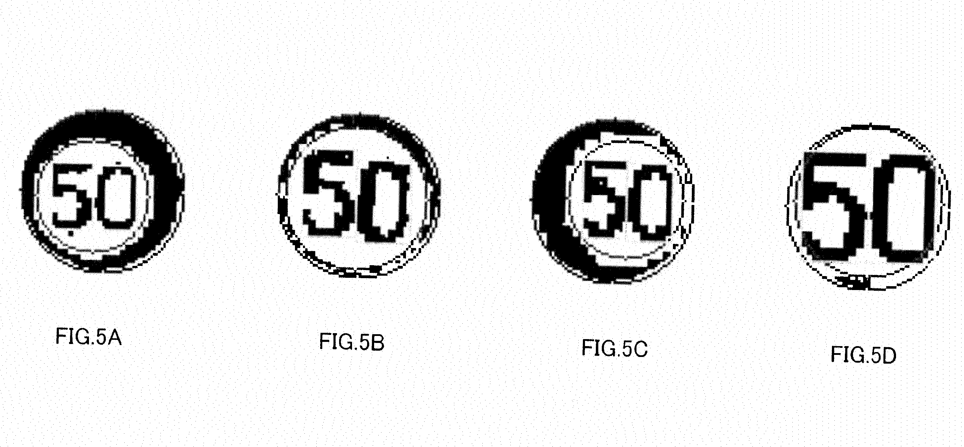

An actual example will now be given. FIG.5 is a drawing in which the four detection results shown in FIG.1B are represented by binary images. As measured image sizes D1 through D3, it is assumed that D1=64, D2=45, and D3=26 are obtained in FIG.5A; D1=64, D2=57, and D3=33 are obtained in FIG.5B; D1=64, D2=47, and D3=31 are obtained in FIG.5C; and D1=64, D2=59, and D3=43 are obtained in FIG.5D.

At this time, for FIGS.5A through 5D respectively, e1 through e3 are as shown in Table 1, and the measured image size selected for object distance measurement are as shown in Table 1.

[Table 1]

|  | FIG.5(A) | FIG.5(B) | FIG.5(C) | FIG.5(D) |
|---|---|---|---|---|
| el(d1=0) | 8.71% | 49.13% | 28.25% | 69.27% |
| e2(d2=0) | 7.59% | 35.5% | 20.71% | 57.33% |
| e3(d3=0) | 5.37% | 33.06% | 35.65% | 95.23% |
| SELECTED IMAGE SIZE | D3 | D3 | D2 | D2 |

The way in which e1=8.71 corresponding to FIG.5A is found in above Table 1 will now be described in detail. Since D1=64, D2=45, and D3=26 in FIG.5A, and the proportional relationship of C1/C2/C3 is 60/40/23.5, if relative error comparison section 104 assumes that d1=0 and sets C1=D1, C2=42.9 and C3=25 are found. Next, relative error comparison section 104 finds d2=|C2-D2|=|42.9-45|=2.1, and d3=|C3-D2|=|25-26|=1. As a result, it is found that e1=d2/D2+d3/D3=2.1/45+1/26=4.71%+4%=8.71%

[2-3] Method 3: Minimizing maximum relative error

First, relative error comparison section 104 assumes that d1=0, and sets C1=D1. Then relative error comparison section 104 finds d2/D2 and d3/D3, and selects the maximum value from among d1/D1, d2/D2, and d3/D3 (the maximum relative error).

Similarly, relative error comparison section 104 selects the maximum relative error from among d1/D1, d2/D2, and d3/D3 when d2=0 is assumed and C2=D2 is set. Also, similarly, relative error comparison section 104 selects the maximum relative error from among d1/D1, d2/D2, and d3/D3 when d3=0 is assumed and C3=D3 is set.

Next, relative error comparison section 104 finds the smallest maximum relative error among the maximum relative errors found for d1=0, d2=0, and d3=0, respectively. Then an image size of a region for which error is made 0 when this smallest maximum relative error is obtained is selected as a region image size that minimizes relative error. For example, if the maximum relative error found for d1=0 is the smallest among maximum relative errors found for d1=0, d2=0, and d3=0, respectively, measured image size D1 is selected as a region image size that minimizes relative error. Similarly, if the maximum relative error found for d2=0 is the smallest among maximum relative errors found for d1=0, d2=0, and d3=0, respectively, measured image size D2 is selected as a region image size that minimizes relative error.

Relative error comparison section 104 then determines selected measured image size D1, D2, or D3 to be an optimal image size for distance calculation, and outputs selected measured image size D1, D2, or D3 to distance estimation section 105.

A case in which relative error comparison section 104 uses D1=64, D2=45, and D3=26 in FIG.5A will now be described as an example. First, when relative error comparison section 104 assumes that d1=0 and sets C1=D1, d2/D2=4.71% and d3/D3=4%. Thus, max(d1/D1, d2/D2, d3/D3)=max(0, 4.71, 4)=4.71% is found.

Next, when relative error comparison section 104 assumes that d2=0 and sets C2=D2, max(d1/D1, d2/D2, d3/D3)=max(5.47, 0, 2.12)=5.47% is found. Similarly, when relative error comparison section 104 assumes that d3=0 and sets C3=D3, max(d1/D1, d2/D2, d3/D3)=max(3.59, 1.78, 0)=3.59% is found.

Then, since min(4.71, 5.47, 3.59)=3.59, measured image size D3 is selected as an image size to be used in object distance calculation.

[3] Effects

As described above, according to this embodiment, by providing region detection sections 101 through 103 that detect, from a captured image of an object, region images of a plurality of regions that are included in the object and whose sizes are known, relative error comparison section 302 that uses image sizes D1 through D3 of a plurality of regions detected by region detection sections 101 through 103, and information regarding sizes that are known in the plurality of regions, to select a region image size that minimizes relative error that is a ratio between the image size and error included in the image size, and distance estimation section 105 that uses the selected region image size to estimate the distance to the object, degradation of distance detection accuracy due to object detection error can be sufficiently suppressed, and the distance to an imaged object can be measured with a high degree of accuracy.

(Embodiment 2)

In Embodiment 2 of the present invention, a case is described in which probability density distributions of relative errors d1/D1, d2/D2, and d3/D3 are used. These probability density distributions are found prior to actual distance measurement as prior statistical knowledge.

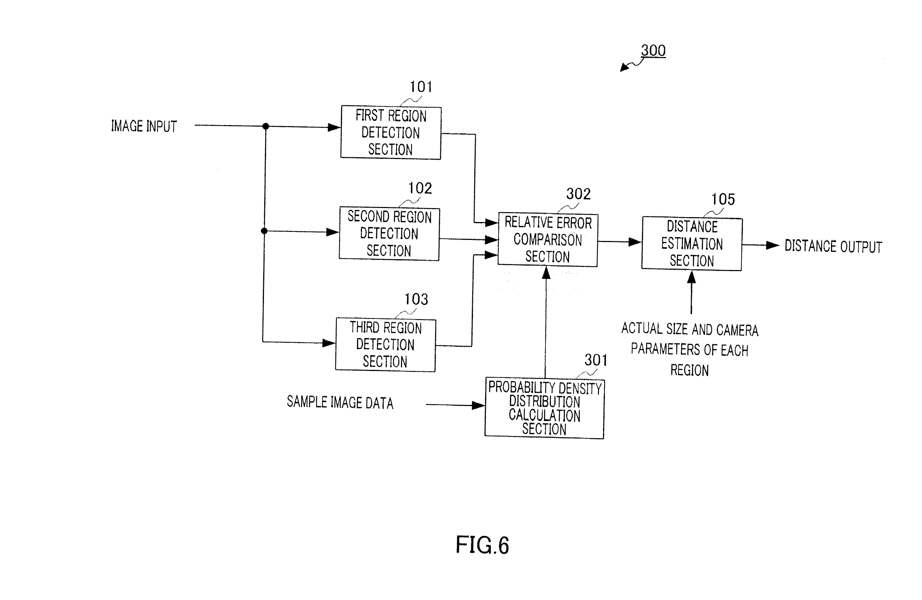

The configuration of distance measuring apparatus 300 of this embodiment is shown in FIG.6, in which parts corresponding to those in FIG.3 are assigned the same reference codes as in FIG.3.

Distance measuring apparatus 300 differs from distance measuring apparatus 100 of Embodiment 1 (FIG.3) in that probability density distribution calculation section 301 has been added, and relative error comparison section 104 has been changed to relative error comparison section 302.

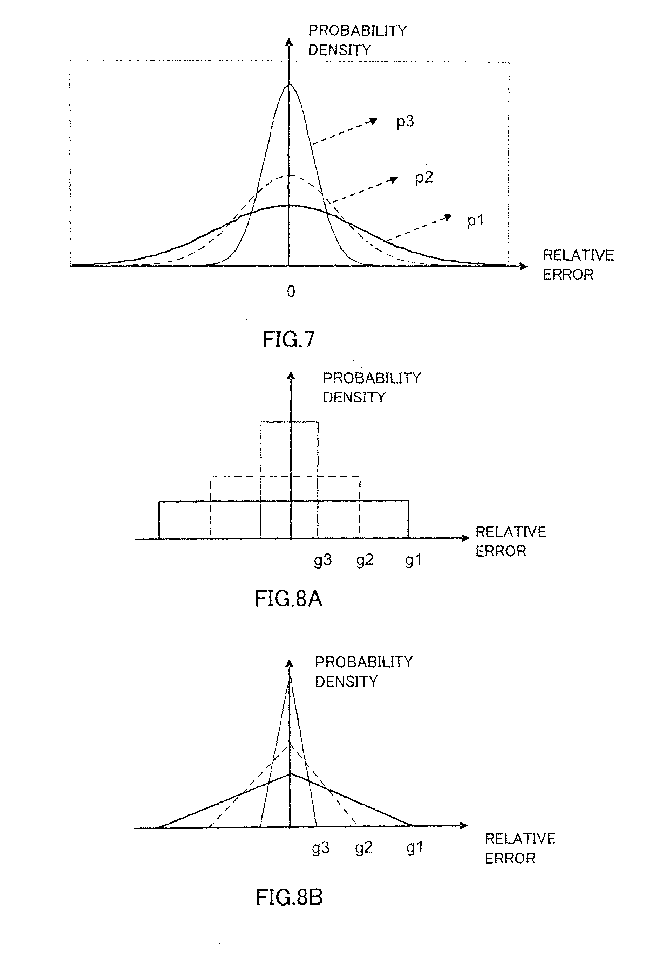

Probability density distribution calculation section 301 finds a probability density distribution as prior statistical knowledge prior to actual distance measurement. Probability density distribution calculation section 301 inputs sample image data, performs detection of first through third regions on a given number of samples by means of a predetermined method, and obtains probability density distributions indicating relative error value distributions such as shown in FIG. 7 by comparing detection results with true values. FIG.7 is a drawing showing relative error probability density distributions of relative error of first through third regions. In FIG.7, the horizontal axis represents relative error, and the vertical axis represents probability density. Also, p1 represents a d1/D1 distribution, p2 a d2/D2 distribution, and p3 a d3/D3 distribution. Probability density distribution calculation section 301 outputs probability density distributions p1 through p3 found beforehand in this way to relative error comparison section 302.

Relative error comparison section 302 uses image sizes D1 through D3 output from first through third region detection sections 101 through 103, and information regarding sizes that are known in a plurality of regions, to calculate relative errors d1/D1, d2/D2, and d3/D3.

These relative errors d1/D1, d2/D2, and d3/D3 can be found, for example, by performing the processing in (i) through (iv) below.

(i) First, it is assumed that C2 is a certain value. Normally, as can be seen from the relationship in FIG.2B, C2 is within the range [D3, D1], and therefore the assumed C2 value is set within the range [D3, D1].
(ii) The assumed C2 is then used in equations 3 to calculate the values of C1 and C3.
(iii) Next, the values of d1, d2, and d3 are calculated using the values of C1 through C3, the values of D1 through D3, and equations 2.
(iv) Relative errors d1/D1, d2/D2, and d3/D3 are then calculated.

Next, relative error comparison section 302 reads probability densities P1, P2, and P3 corresponding to relative errors d1/D1, d2/D2, and d3/D3 from probability density distributions p1, p2, and p3 found as prior statistical knowledge by probability density distribution calculation section 301. Relative error comparison section 302 then calculates relative error probability density product P1×P2×P3 by multiplying together read probability densities P1, P2, and P3.

Relative error comparison section 302 varies the value of C2 assumed in (i) above within the range [D3, D1], and calculates relative errors d1/D1, d2/D2, and d3/D3 corresponding thereto. Relative error comparison section 302 also reads new probability densities P1, P2, and P3 corresponding to calculated relative errors d1/D1, d2/D2, and d3/D3 from probability density distributions p1, p2, and p3, and calculates new relative error probability density product P1×P2×P3.

Relative error comparison section 302 finds the smallest probability density product from among a plurality of probability density products P1×P2×P3 calculated in this way. Then relative error comparison section 302 determines a value of C2 that minimizes the probability density product to be an optimal image size for distance calculation, and outputs that value of C2 to distance estimation section 105.

As described above, according to this embodiment, a region image size that minimizes relative errors d1/D1, d2/D2, and d3/D3 is selected using relative error probability density distributions for a plurality of regions in addition to image sizes D1 through D3 of a plurality of regions detected by detection sections 101 through 103 and information regarding sizes that are known in a plurality of regions. That is to say, whereas in Embodiment 1 an optimal region image size is selected based on a relative error sum, in this embodiment an optimal region image size is selected based on a relative error probability density product. By this means, degradation of distance detection accuracy due to object detection error can be sufficiently suppressed in the same way as in Embodiment 1, and the distance to an imaged object can be measured with a higher degree of accuracy.

If it is difficult to find a probability density distribution directly, a probability density distribution can be found approximately using a relative error maximum value. Specifically, if maximum values g1, g2, and g3 in relative errors d1/D1, d2/D2, and d3/D3 are acquired by means of sampling statistics or theoretical estimation, probability density distributions can be set as shown in FIG.8A or FIG.8B. FIG.8A shows an example in which a probability density distribution is set on the assumption that the probability density distribution is uniform between positive and negative maximum values. In this case, a probability density distribution height value is calculated so that a predetermined rectangular area (integral sum) is 1, FIG.8B shows an example in which positive and negative relative error maximum value probability densities are set to 0, and a probability density distribution maximum value corresponding to relative error 0 is calculated so that a predetermined rectangular area (integral sum) is 1. Thereafter, a distance can be calculated using an above acquired approximate probability density distribution.

(Embodiment 3)

In Embodiment 3 of the present invention, a method is described whereby a camera parameter such as camera exposure is controlled, and each region of a road sign or the like is detected with a higher degree of accuracy.

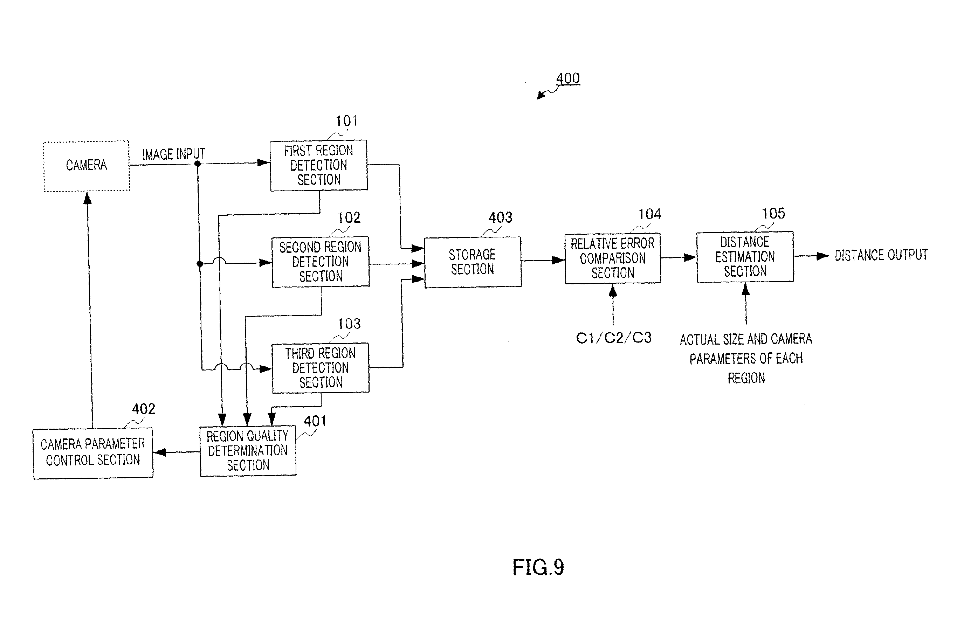

The configuration of distance measuring apparatus 400 of this embodiment is shown in FIG.9, in which parts corresponding to those in FIG.3 are assigned the same reference codes as in FIG.3.

Distance measuring apparatus 400 differs from distance measuring apparatus 100 of Embodiment 1 (FIG.3) in being additionally provided with region quality determination section 401, camera parameter control section 402, and storage section 403.

Region quality determination section 401 determines the imaging quality of each region output from first through third region detection sections 101 through 103, decides a region that should be re-detected in the next frame, and outputs information indicating a decided region to camera parameter control section 402.

Camera parameter control section 402 estimates optimal imaging conditions for a region that should be re-detected output from region quality determination section 401, and sets a camera parameter -- for example, aperture, focus, sensitivity, or the like -- for the camera so that these optimal imaging conditions are achieved.

Storage section 403 performs multi-frame comparisons of regions output from first through third region detection sections 101 through 103, and stores a captured image with the best imaging quality for each region. Here, it is necessary to take distance variation due to the imaging time into consideration. It is desirable for a short frame image imaging interval to be set in order to minimize distance variation between frames.

As described above, the present invention detects a plurality of regions from an image and performs distance measurement using images of the detected plurality of regions, and therefore the higher the imaging quality of each region, the higher is the accuracy of distance measurement. However, imaging conditions for improving imaging quality may differ for each region.

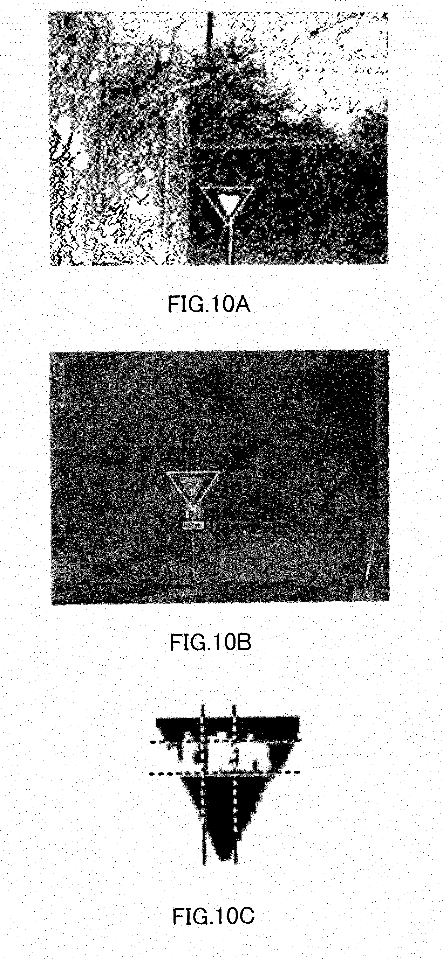

FIG.10 is a drawing showing images of a stop sign captured at night. FIG.10A is a high-exposure image in which the outer frame of the sign is clear against the background, but it is extremely difficult to identify the text within the area of the sign. On the other hand, FIG.10B is a low-exposure image in which it is difficult to detect the outer frame of the sign, but the text within the area of the sign can be identified comparatively easily. If the outer frame of the sign is taken as a first region and the frame of each character as a second region, as shown in FIG.10C, high exposure is suitable for detecting the first region, and conversely, low exposure is suitable for detecting a second region. Having camera parameter control section 402 control a camera parameter such as exposure according to each region in this way enables the imaging quality of each region to be improved.

Thus, in this embodiment, region quality determination section 401 determines the imaging quality of a plurality of regions, and decides a region that should be re-detected in the next frame. Then a camera parameter suitable for a region that should be re-detected is set by camera parameter control section 402, and the camera captures a next-frame image. By this means, a high-quality region image is stored in storage section 403 for each region.

Relative error comparison section 104 and distance estimation section 105 use a high-quality region image stored in storage section 403 to perform the processing described in Embodiment 1 or Embodiment 2. By this means, degradation of distance detection accuracy due to object detection error can be suppressed to a greater extent, and the distance to an imaged object can be measured with a higher degree of accuracy.

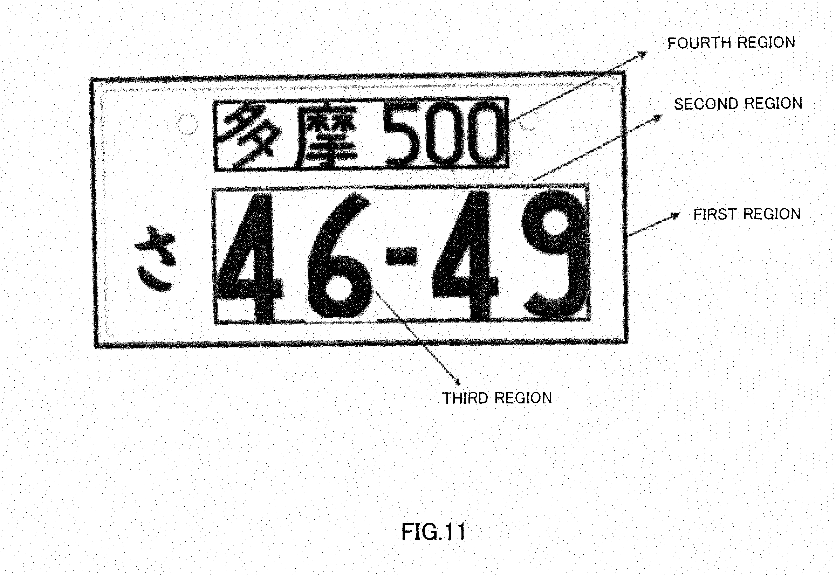

In the above embodiments, road signs have been described by way of example, but the present invention is not limited to this, and a vehicle number plate may also be used, for example. Detecting a vehicle number plate enables the distance to a vehicle ahead to be measured, for example. FIG.11 is a drawing showing four regions of a number plate. If the first through third regions in FIG.11 are taken as D1, D2, and D3 of Embodiment 1, the distance to the number plate -- that is, the vehicle ahead -- can be measured with a high degree of accuracy using the method described in Embodiment 1. It is also possible for distance measuring apparatus 400 to take the first, second, and fourth regions in FIG.11 as D1, D2, and D3 of Embodiment 1.

Also, in the above embodiments, first through third regions are detected, but the present invention is not limited to this, and provision may also be made for four or more regions to be detected, for the image sizes of these four regions and known size information to be used to select a region image size that minimizes relative error, and for the selected region image size to be used to estimate the distance to an object. Processing performed when four or more regions are used in this way is basically the same as when three regions are used (as in the above embodiments), the only difference being that the number of regions is increased.

The disclosure of Japanese Patent Application No.2009-134225, filed on June 3, 2009, including the specification, drawings and abstract, is incorporated herein by reference in its entirety.

Industrial Applicability

The present invention is suitable for use in a distance measuring apparatus that measures distances to road signs, traffic signals, or suchlike objects, for example, whose sizes have been unified according to a standard.

Reference Signs List

101 First region detection section
102 Second region detection section
103 Third region detection section
104, 302 Relative error comparison section
105 Distance estimation section
301 Probability density distribution calculation section
401 Region quality determination section
402 Camera parameter control section
403 Storage section

**Claims**

1. A distance measuring apparatus comprising:

   a region image detection section that detects, from a captured image of an object, region images of a plurality of regions that are included in said object and whose sizes are known;
   a relative error comparison section that uses image sizes of said plurality of regions detected by said region image detection section, and information regarding sizes that are known in said plurality of regions, to select a region image size that minimizes relative error that is a ratio between said image size and error included in said image size; and
   a distance estimation section that uses said selected region image size to estimate a distance to said object.

2. The distance measuring apparatus according to claim 1, wherein said relative error comparison section uses a size ratio that is known between said plurality of regions.

3. The distance measuring apparatus according to claim 1, wherein said relative error comparison section finds a relative error sum that is a sum of relative errors of each region, and selects an image size of a region that minimizes said relative error sum.

4. The distance measuring apparatus according to claim 1, wherein said relative error comparison section selects a region image size that minimizes said relative error sum by performing following processing (i) through (iii):

   (i) assuming said error of any one of said plurality of regions to be 0, and sequentially changing a region for which said error is assumed to be 0;
   (ii) finding said relative error sum of another region excluding one region for which said error is assumed to be 0 under a condition of said (i); and
   (iii) finding by making said error in which region 0 a relative error sum of said (ii) is minimized, and selecting a region image size for which said error is made 0 when that relative error sum is minimized as a region image size that minimizes said relative error.

5. The distance measuring apparatus according to claim 1, wherein said relative error comparison section selects a region image size that minimizes said relative error, using a probability density distribution of said relative error for said plurality of regions, prepared as prior statistical knowledge, in addition to image sizes of said plurality of regions detected by said region image detection section and information regarding sizes that are known in said plurality of regions.

6. The distance measuring apparatus according to claim 1, further comprising:

   a region quality determination section that determines imaging quality of said plurality of regions and decides a region that should be re-detected in a next frame; and

   a camera parameter control section that sets a camera parameter suitable for a region that should be re-detected.

7. A distance measuring method comprising:

   a region image detection step of detecting, from a captured image of an object, region images of a plurality of regions that are included in said object and whose sizes are known;

   a relative error comparison step of using image sizes of said plurality of regions detected by said region image detection step, and information regarding sizes that are known in said plurality of regions, to select a region image size that minimizes relative error that is a ratio between said image size and error included in said image size; and

   a distance estimation step of using said selected region image size to estimate a distance to said object.

FIG.1A

FIG.1B

FIG.2A

FIG.2B

$\underrightarrow{100}$

IMAGE INPUT

101
FIRST REGION
DETECTION
SECTION

102
SECOND REGION
DETECTION
SECTION

103
THIRD REGION
DETECTION
SECTION

104
RELATIVE ERROR
COMPARISON
SECTION

C1/C2/C3

105
DISTANCE
ESTIMATION
SECTION

DISTANCE OUTPUT

ACTUAL SIZE AND CAMERA
PARAMETERS OF EACH
REGION

FIG.3

FIG.4

```
                    START
                      │
                      ▼
            ACQUIRE D1 THROUGH D3        ST201
               OF FIRST THROUGH
                 THIRD REGIONS
                      │
                      ▼
            DIVIDE [D3, D1] INTO N       ST202
                 EQUAL PARTS
                      │
                      ▼
                    n=0                  ST203
                  Emin=∞
                      │
                      ▼
            ASSUME ACTUAL SIZE           ST204
              OF SECOND REGION
                      │
                      ▼
              C1=k21 × C2                ST205
              C3=k23 × C2
                      │
                      ▼
              CALCULATE ERRORS           ST206
               d1=|C1-D1|
               d2=|C2-D2|
               d3=|C3-D3|
                      │
                      ▼
          E=d1/D1+d2/D2+d3/D3            ST207
```

ST208: E<Emin?  NO / YES

ST209: Emin=E, Copt=C2

ST210: n=N?  NO / YES

ST211: n=n+1

ST212: C2=Copt

END

FIG.5D

FIG.5C

FIG.5B

FIG.5A

EP 2 439 491 A1

FIG.6

FIG.7

FIG.8A

FIG.8B

FIG.9

FIG.10A

FIG.10B

FIG.10C

FOURTH REGION

SECOND REGION

FIRST REGION

THIRD REGION

FIG.11

EP 2 439 491 A1

## INTERNATIONAL SEARCH REPORT

| | International application No. |
|---|---|
| | PCT/JP2010/003441 |

| A. CLASSIFICATION OF SUBJECT MATTER |
|---|
| *G01C3/06*(2006.01)i, *G06T1/00*(2006.01)i |

According to International Patent Classification (IPC) or to both national classification and IPC

| B. FIELDS SEARCHED |
|---|

Minimum documentation searched (classification system followed by classification symbols)
G01C3/00-3/32, G01B11/00-11/30, G06T1/00-1/40;3/00-5/50;9/00-9/40

Documentation searched other than minimum documentation to the extent that such documents are included in the fields searched

| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

| C. DOCUMENTS CONSIDERED TO BE RELEVANT |
|---|

| Category* | Citation of document, with indication, where appropriate, of the relevant passages | Relevant to claim No. |
|---|---|---|
| A | JP 2005-321872 A (Fuji Photo Film Co., Ltd.), 17 November 2005 (17.11.2005), entire text; fig. 1 to 9 (Family: none) | 1-7 |
| A | JP 2004-271250 A (Mitsubishi Motors Corp.), 30 September 2004 (30.09.2004), entire text; fig. 1 to 5 (Family: none) | 1-7 |
| A | JP 11-166811 A (Nippon Telegraph And Telephone Corp.), 22 June 1999 (22.06.1999), entire text; fig. 1 to 7 (Family: none) | 1-7 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 23 July, 2010 (23.07.10) | 03 August, 2010 (03.08.10) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2010/003441

C (Continuation). DOCUMENTS CONSIDERED TO BE RELEVANT

| Category* | Citation of document, with indication, where appropriate, of the relevant passages | Relevant to claim No. |
|---|---|---|
| A | JP 2003-30628 A (Fujitsu Ltd.), 31 January 2003 (31.01.2003), entire text; fig. 1 to 41 (Family: none) | 1-7 |

Form PCT/ISA/210 (continuation of second sheet) (July 2009)

22

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP HEI8219775 B
- JP 2006329776 A
- JP 2006330908 A
- JP 2009134225 A